# EUROPÄISCHE PATENTSCHRIFT

(11) **EP 0 669 196 B1**
(45) Veröffentlichungstag und Bekanntmachung des Hinweises auf die Patenterteilung: **13.01.1999**
(21) Anmeldenummer: 95101688.0
(22) Anmeldetag: 08.02.1995
(51) Int. Cl.: B29C 44/36

(54) **Verfahren und Vorrichtung zur Herstellung von endlosen Polyurethan-Formkörpern**
Method and device for making endless polyurethane objects
Procédé et dispositif pour la fabrication d'objets sans fin en polyuréthane

(30) Priorität: 21.02.1994 DE 4405427
(43) Veröffentlichungstag der Anmeldung: 30.08.1995
(73) Patentinhaber: Hennecke GmbH, 51379 Leverkusen (DE)
(72) Erfinder: Sulzbach, Hans-Michael, Dipl.-Ing., D-53639 Königswinter-Vinxel (DE); Röhrig, Lothar, Dipl.-Ing., D-53819 Neunkirchen-Seelscheid (DE)
(74) Vertreter: Drope, Rüdiger, Dr.

(56) Entgegenhaltungen:
- EP-A- 0 437 727

## Beschreibung

Gegenstand der vorliegenden Erfindung sind ein kontinuierliches Verfahren und eine Vorrichtung zur Herstellung von in einer Dimension endlosen Polyurethan-Formkörpern.

Endlose Polyurethan-Formkörper werden durch kontinuierliches Einbringen eines Polyurethan-Reaktivgemisches in kontinuierliche Formgebungswerkzeuge hergestellt. Das Reaktivgemisch wird dabei in sogenannten Mischköpfen, insbesondere Hochdruckmischköpfen, denen die Komponenten der Reaktivmischung zugeführt werden, erzeugt. Ein Problem des vollkontinuierlichen Betriebes besteht darin, daß sowohl in der Mischkammer als auch am Auslauf des Mischkopfes im Laufe des Betriebes Ablagerungen von ausreagierter Polyurethan-Mischung auftreten, die eine Betriebsunterbrechung und Säuberung des Mischkopfes verlangen.

Die Technik der Polyurethan-Herstellung ist im Kunststoffhandbuch, Herausgeber Becker/Braun, Bd. 7 "Polyurethane", 1993, S. 139-192, beschrieben; zur Technik der Mischköpfe siehe insbesondere S. 174 ff.

Die Außerbetriebnahme und Inbetriebnahme eines Mischkopfes mit Austragsorgan für die Reaktivmischung ist eine aufwendige Prozedur: Nach der Außerbetriebnahme ist sicherzustellen, daß Reste der Reaktivmischung nicht in der Mischkammer und dem daran anschließenden Austragsorgan verbleiben.

Zu diesem Zweck wird die Zufuhr beider Reaktivkomponenten zum Mischkopf nicht gleichzeitig gesperrt, sondern zunächst nur die Zufuhr der einen Komponente, im allgemeinen der Isocyanatkomponente, unterbrochen, so daß die andere Komponente, im allgemeinen die Polyolkomponente, noch eine gewisse Zeit durch den Mischkopf und das Austragsorgan strömt, so daß Reste der Reaktivmischung aus dem Mischkopf und dem Austragsorgan verdrängt werden (Betriebszustand "Spülen").

Vor der Inbetriebnahme des Mischkopfes ist sicherzustellen, daß die Zuleitungen zum Mischkopf frei von Luftblasen sind und am Mischkopf exakt konditioniertes Material ansteht, d.h. Material mit der erforderlichen Betriebstemperatur und in der richtigen Abmischung (z.B. Polyol im richtigen Verhältnis mit den Zusatzkomponenten). Zu diesem Zweck ist für jede Komponente eine Kreislaufführung durch den Mischkopf bei abgesperrter Mischkammer vorgesehen, wobei die Reaktivkomponenten durch den Mischkopf und zurück zum jeweiligen Vorratsbehälter geführt werden. Dabei werden einerseits eventuell in den Zuleitungen vorhandene Luftblasen entfernt und andererseits das im Vorratsbehälter durch Rühren und Temperieren exakt konditionierte Material ständig am Mischkopf vorbeigeführt.

Zur Vermeidung von Betriebsunterbrechungen zur Säuberung, Reparatur und Austausch von Teilen wäre es im Prinzip möglich, zwei Mischköpfe im Wechsel zu betreiben, wobei jeder der Mischköpfe mit getrennten, unabhängigen Zuleitungen, Pumpen und Regelorganen ausgestattet ist.

Aufgabe der vorliegenden Erfindung ist es, den damit verbundenen unerwünscht großen technischen Aufwand zu reduzieren und insbesondere die Möglichkeit zu schaffen, bereits bestehende Anlagen mit nur geringem Platzangebot für die Aufstellung zusätzlicher Aggregate umrüstbar für den kontinuierlichen Wechselbetrieb zweier Mischköpfe auszurüsten.

Zur Lösung der erfindungsgemäßen Aufgabe, nämlich Produktionsunterbrechungen während der Säuberung bzw. der Wartung dem Mischkopfes zu vermeiden, wurde gemäß EP-A 437 727 bereits vorgeschlagen, zwei Mischköpfe vorzusehen, die abwechselnd betrieben werden, wobei beide Mischköpfe durch eine gemeinsame Dosierpumpe beschickt werden und die zugeführten Komponenten zunächst zum "Konditionieren" durch den nicht in Betrieb befindlichen Mischkopf gefördert werden und danach durch eine immer offene Verbindungsleitung zwischen beiden Mischköpfen dem im Betrieb befindlichen Mischkopf zugeführt werden. Nachteilig bei diesem Vorschlag ist jedoch, daß in der immer offenen Verbindungsleitung beim Umschalten von einem Mischkopf auf den anderen Mischkopf eine Umkehr der Strömungsrichtung der jeweiligen Komponente herbeigeführt werden muß, durch die Druckschwankungen bedingt werden, die zu Dosierschwankungen in der Mischkammer führen. Ferner ist eine Demontage des im Betriebszustand "Konditionieren" sich befindenden Mischkopfes nicht möglich, da er durch die immer offene Verbindungsleitung gefesselt ist. Damit ist eine komplette Wartung, d.h. Austausch von Mischkopfelementen während der Produktion nicht möglich.

Noch gravierender ist, daß während des Betriebszustandes "Spülen" mit der Polyolkomponente die Rezeptur an dem Mischkopf, der im Betriebszustand Mischen ist, überhaupt nicht mehr stimmt und eine einwandfreie Produktion nicht mehr möglich ist.

Erfindungsgemäß wird daher vorgeschlagen, den zum Spülen und Konditionieren erforderlichen Komponentenstrom durch eine unabhängige "Konditionierpumpe" zu fördern. Die Konditionierpumpe kann bezüglich ihrer Förderkapazität wesentlich geringer ausgelegt sein, als die "Dosierpumpe" zur Förderung in die Mischkammer; insbesondere ist die Konditionierpumpe eine Billigstpumpe, die nicht kalibriert zu sein braucht.

Gegenstand der vorliegenden Erfindung ist demgemäß eine Vorrichtung zur Herstellung von in einer Dimension endlosen Polyurethan-Formkörpern, bestehend aus einem kontinuierlichen Formgebungswerkzeug sowie
a) mindestens zwei abwechselnd betriebenen Mischköpfen für die Polyurethan-Reaktivkomponenten, die Umschaltventile für die Betriebszustände "Mischen" und "Konditionieren" bzw. "Spülen" aufweisen,
b) einer je Komponente gemeinsamen Dosierpumpe mit Zuleitung zu jedem Mischkopf,
c) einer je Komponente gemeinsamen Konditionierpumpe mit Zuleitung zu jedem Mischkopf,
d) am Komponenteneingang jedes Mischkopfes vorgesehenen Umschaltventilen zwischen den Zuleitungen von der Dosierpumpe und der Konditionierpumpe, wobei der Eingang im Betriebszustand "Mischen" an der Zuleitung von der Dosierpumpe und im Betriebszustand "Konditionieren" bzw. "Spülen" an der Zuleitung von der Konditionierpumpe angeschlossen ist, sowie
e) einer Rückführleitung je Komponente und je Mischkopf, die im Betriebszustand "Konditionieren" aktiv ist.

Vorzugsweise enthalten die Zu- und Rückführleitungen zu jedem Mischkopf Absperrventile, so daß der jeweils nicht im Betriebszustand "Mischen" befindliche Mischkopf nach Schließen der Absperrventile demontiert und gewartet bzw. ausgetauscht werden kann.

Im Sinne der vorliegenden Erfindung bedeutet der Betriebszustand "Mischen", daß mittels der Dosierpumpen die Komponenten in dem durch die Rezeptur vorgeschriebenen Mengenverhältnis in die Mischkammer des Mischkopfes gefördert werden.

Der Betriebzustand "Konditionieren" bedeutet, daß die Komponenten über eine Kreislaufleitung durch den Mischkopf geführt werden, ohne in die Mischkammer zu gelangen, so daß am Mischkopf zumindest im Augenblick des Umschaltens von einem auf den anderen Mischkopf Material ansteht mit der richtigen Betriebstemperatur und in der richtigen Abmischung zwischen Haupt- und Zusatzkomponenten.

Unter "Komponenten" bzw. "Reaktivkomponenten" werden die Hauptkomponenten der Polyurethan-Polyadditionsreaktion, nämlich Polyol einerseits und Isocyanat andererseits, verstanden, wobei weitere Bestandteile wie Katalysatoren, Füllstoffe, Modifizierungsmittel, usw., eben diesen Hauptkomponenten zugemischt sind.

Denkbar ist aber auch eine separate Zuführung der Zusatzkomponenten in die Mischkammer.

Vorzugsweise sind ferner Mittel vorgesehen, die es erlauben, den jeweils nicht in Betrieb befindlichen Mischkopf aus der Produktionsstellung in eine Position zu verfahren, in der dieser leicht zugänglich gereinigt und gegebenenfalls demontiert werden kann.

Gegenstand der vorliegenden Erfindung ist auch das Verfahren zur kontinuierlichen Herstellung von in einer Dimension endlosen Polyurethan-Formkörpern unter Einsatz von mindestens zwei abwechselnd betriebenen Mischköpfen für die Polyurethan-Reaktivkomponenten, wobei an dem jeweils nicht in Betrieb befindlichen Mischkopf zumindest vor der Inbetriebnahme unter Durchströmen mit den Reaktivkomponenten exakt konditioniertes Material ansteht und nach Außerbetriebnahme mit nur einer Komponente, in der Regel der Polyolkomponente, gespült wird, wobei die Komponenten durch für die Mischköpfe gemeinsame, jedoch bezüglich der Betriebszustände 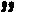 Mischen" und 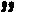 Konditionieren" unabhängige Aggregate gefördert werden.

Bei den erfindungsgemäß herstellbaren, in einer Dimension endlosen Polyurethan-Formkörpern kann es sich um massive oder aus Schaum bestehende Platten, Rohre oder Profilleisten handeln. Dabei werden als endlose Formgebungswerkzeuge im allgemeinen Förderbänder eingesetzt, in deren Zwischenraum die Polyurethan-Mischung eingebracht wird und deren Länge und Fördergeschwindigkeit so bemessen ist, daß die Verweilzeit der Reaktivmischung zwischen den Förderbändern ausreicht, um die Reaktivmischung auszuhärten. Gegebenenfalls können die Förderbänder Strukturelemente aufweisen, die eine Profilierung der Formkörper erlauben. Ferner können die Formkörper mit einer Profilierung versehen werden, indem gleichzeitig das Kaschiermaterial zwischen die Förderbänder eingeführt wird. Vorrichtungen dieser Art sind grundsätzlich bekannt, siehe z. B. DE-B 1 266 485, DE-A 1 778 407 und DE-A 2 449 044.

Die Erfindung wird nachfolgend anhand der beigefügten Figuren näher erläutert:
- Fig. 1 und 2: zeigen eine schematisierte Seitenansicht und Aufsicht auf eine Vorrichtung zur beispielhaften Herstellung von kaschierten Polyurethan-Hartschaumplatten,
- Fig. 3 und 4: zeigen verschiedene Betriebszustände für die Komponentenzufuhr zu den Mischköpfen.

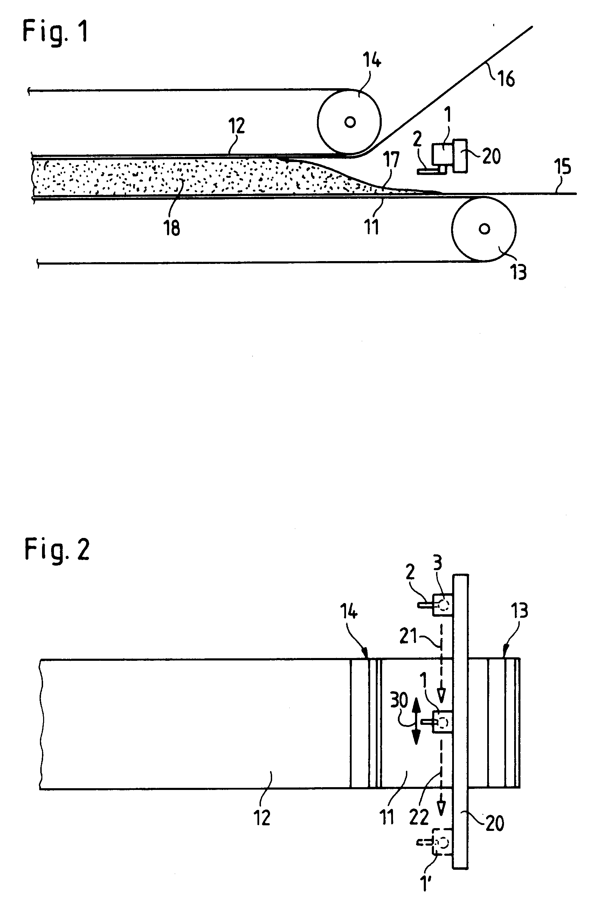

Fig. 1 zeigt einen Mischkopf 1 mit Austragsorgan 2, das an einer Brücke 20 befestigt ist. Aus dem Austragsorgan 2 wird die Polyurethan-Reaktivmischung 17 auf die untere Kaschierfolie 15 aufgesprüht. Die Kaschierfolie 15 liegt auf dem unteren Transportband 11, dessen rechte Umlenkrolle 13 gezeigt ist, auf. Gleichzeitig wird die obere Kaschierfolie 16 unter das obere Förderband 12, zu dem die Umlenkrolle 14 gehört, eingeführt. Die Reaktivmischung 17 schäumt in dem Zwischenraum zwischen den beiden Transportbändern 11 und 12 auf und bildet die Schaumstoffplatte 18.

Fig. 2 zeigt die Vorrichtung gemaß Fig. 1 in Aufsicht, wobei die Kaschierfolien 15 und 16 nicht gezeichnet sind. Gleiche Bezugszeichen bezeichnen gleiche Elemente. Der in Betrieb befindliche Mischkopf 1 wird, wie durch den Pfeil 30 angezeigt, durch entsprechende Mittel in der Brücke 20 zur Überdeckung der Breite des Transportbandes 11 mit Reaktivmasse hin- und herbewegt. An der Brücke 20 befindet sich ein zweiter Mischkopf 3 außer Betrieb in einer Stellung, in der dieser gereinigt bzw. gewartet werden kann. Nach Beendigung der Betriebszeit des Mischkopfes 1 (Beeinträchtigung des Betriebes durch anhaftende ausreagierte Polyurethan-Masse) wird der Mischkopf 3 zunächst entlang Pfeil 21 neben den Mischkopf 1 gefahren, sodann die Komponentenzufuhr von Mischkopf 1 auf Mischkopf 3 umgeschaltet und danach Mischkopf 1 in die Position 1' gebracht, wo dieser gereinigt und gegebenenfalls demontiert werden kann.

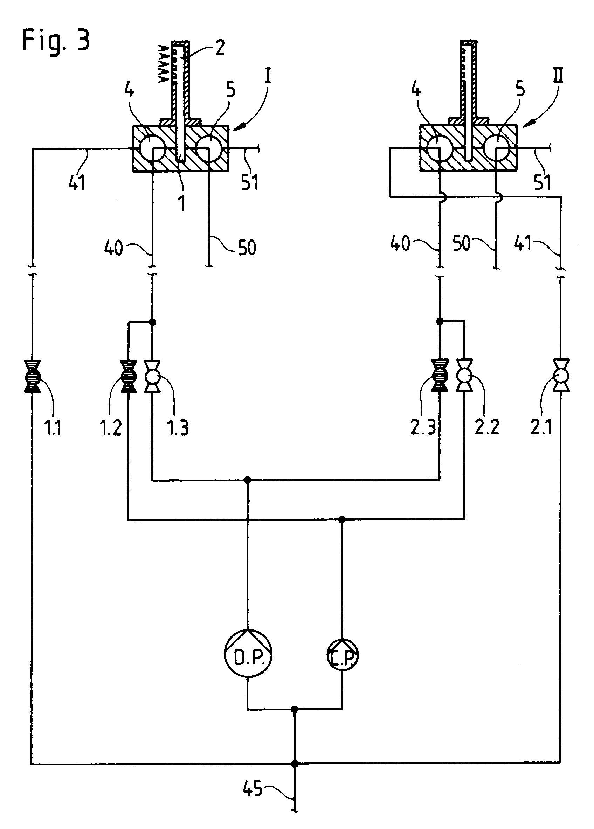

Fig. 3 zeigt zwei typische Mischköpfe I und II, wobei sich der Mischkopf I im Betriebzustand "Mischen" und der Mischkopf II im Betriebszustand "Konditionieren" befindet. Der beispielhaft dargestellte Mischkopf I enthält eine Mischkammer 1 sowie einen Mischkopfauslauf 2. Ferner sind Zuführleitungen 40 und 50 sowie Rückführleitungen 41 und 51 für die beiden Komponenten vorgesehen. In den Mischkopf integriert sind Dreiwege-Umschaltorgane 4 und 5. Gezeichnet sind lediglich Rohrleitungen und Pumpen für eine Komponente, z.B. die Polykomponente. Im Betriebszustand "Mischen" wird die Komponente über Ventil 1.3 und Umschaltorgan 4 der Mischkammer 1 zugeführt. Die Rücklaufleitungen 41 und 51 sind abgeschlossen.

Der Mischkopf II befindet sich im Betriebszustand "Konditionieren". Die Umschaltorgane 4 und 5 sperren in diesem Betriebszustand die Mischkammer 1 und den Auslauf 2 ab und verbinden die Zulaufleitungen 40 bzw. 50 mit den Rücklaufleitungen 41 bzw. 51. Das Ventil 2.3 von der Dosierpumpe D.P. ist geschlossen. Ventile 2.2 und 2.1 sind geöffnet. Die Komponenten werden von der Konditionierpumpe C.P. durch den Mischkopf gefördert, ohne in die Mischkammer zu gelangen. Erfindungsgemäß ist für beide Mischköpfe I und II eine gemeinsame Dosierpumpe für jede Komponente vorgesehen, die über Leitung 45 aus dem nicht gezeichneten Vortatsbehälter für die jeweilige Komponente fördert. Gezeichnet ist die jeweilige Leitungs-, Pumpen- und Ventil-Konfiguration nur für eine Komponente, z.B. die Polyol-Komponente, mit Zuleitung 40 und Rückführleitung 41. Für die Isocyanatkomponente, die über Zuleitung 50 zugeführt wird, ist die entsprechende Konfiguration vorgesehen.

Erfindungsgemäß ist neben der Dosierpumpe D.P. eine ebenfalls aus dem Vorratsbehälter fördernde Konditionierpumpe C.P. vorgesehen und ferner zu jedem Mischkopf gehörende Ventile 1.2 und 1.3 bzw. 2.2 und 2.3. Die Ventile sind so geschaltet, daß während des Betriebszustandes "Mischen" die Dosierpumpe zum Mischkopf fördert (Mischkopf I) und während des Betriebszustandes "Konditionieren" die Konditionierpumpe zum Mischkopf (Mischkopf II) fördert. Während des Konditionierens ist ferner die Rückführleitung 41 über Ventil 1.1 bzw. 2.1 aktiv, so daß der Komponentenstrom zum Dosierbehälter bzw. in die Zuleitung 45 zu den Pumpen zurückgefördert wird.

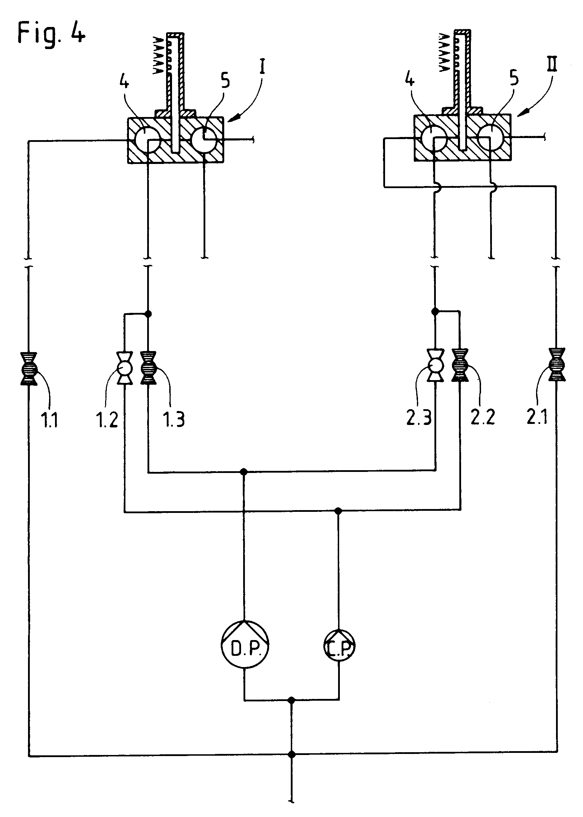

Nachdem Mischkopf I nach einiger Betriebsdauer gereinigt werden muß, wird dieser durch Schließen des Ventils 1.3, Öffnen des Ventils 1.2 sowie Absperren der Zufuhrleitung 50 für die andere Reaktivkomponente durch Schalten des Umschaltorgans 5 in den Betriebszustand "Spülen" überführt und Mischkopf II durch Schalten der Umschaltorgane 4 und 5, Öffnen des Ventils 2.3 und Schließen der Ventile 2.1 und 2.2 in den Betriebszustand "Mischen" überführt. Der so herbeigeführte Zustand ist in Fig. 4 dargestellt.

Nachdem Reste der Reaktivmischung aus der Mischkammer und dem Austragsorgan durch Spülen mit der Polyolkomponente entfernt sind, kann Mischkopf I nach Schließen des Ventils 1.2 und/oder Abstellen der Konditionierpumpe C.P. demontiert und gewartet werden.

Auch ein kompletter Austausch von Mischkopf I ist nun möglich.

## Patentansprüche

1. Vorrichtung zur Herstellung von in einer Dimension endlosen Polyurethan-Formkörpern (18) bestehend aus:
a) mindestens zwei abwechselnd betriebenen Mischköpfen (1, 3 ,I ,II) für die Polyurethan-Reaktivkomponenten, die Umschaltventile (4, 5) für die Betriebszustände 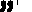 Mischen" und 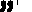 Konditionieren" aufweisen,
b) einer je Komponente gemeinsamen Dosierpumpe (D.P.) mit Zuleitung (40, 50) zu jedem Mischkopf,
c) einer je Komponente gemeinsamen Konditionierpumpe (C.P.) mit Zuleitung zu jedem Mischkopf,
d) am Komponenteneingang jedes Mischkopfes vorgesehenen Ventilen (1.2, 1.3, 2.2, 2.3) zum Umschalten zwischen den Zuleitungen von der Dosierpumpe und der Konditionierpumpe, wobei der Eingang im Betriebszustand 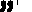 Mischen" an der Zuleitung von der Dosierpumpe und im Betriebszustand 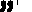 Konditionieren" an der Zuleitung von der Konditionierpumpe angeschlossen ist, sowie
e) einer Rückführleitung (41, 51) je Komponente und je Mischkopf, die im Betriebszustand 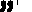 Konditionieren" aktiv ist.

2. Verfahren zur Herstellung von in einer Dimension endlosen Polyurethan-Formkörpern (18) unter Einsatz von mindestens zwei abwechselnd betriebenen Mischköpfen (1, 3, I, II) für die Polyurethan-Reaktivkomponenten` wobei an dem jeweils nicht in Betrieb befindlichen Mischkopf zumindest vor der Inbetriebnahme durch Kreislauffahren mit den Reaktivkomponenten exakt konditioniertes Material ansteht, wobei die Komponenten durch für die Mischköpfe gemeinsame, jedoch bezüglich der Betriebszustände 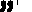 Mischen" und 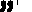 Konditionieren" unabhängige Aggregate (D.P., C.P.) gefördert werden.

## Claims

1. An arrangement for the production of polyurethane mouldings (18) endless in one dimension, consisting of:
a) at least two alternately operated mixing heads (1, 3, I, II) for the polyurethane reactive components which comprise changeover valves (4, 5) for the "mix" and "condition" operating modes,
b) a common metering pump (M.P.) per component with a feed line (40, 50) to each mixing head,
c) a common conditioning pump (C.P.) per component with a feed line to each mixing head,
d) valves (1.2, 1.3, 2.2, 2.3) for switching between the feed lines from the metering pump and the conditioning pump provided at the component entrance of each mixing head, the entrance being connected to the feed line from the metering pump in the "mix" operating mode and to the feed line from the conditioning pump in the "condition" operating mode, and
e) a return line (41, 51) per component and mixing head which is active in the "condition" operating mode.

2. A process for the production of polyurethane mouldings (18) endless in one dimension using at least two alternately operated mixing heads (1, 3, I, II) for the reactive polyurethane components, material which has been correctly conditioned by circulation of the reactive components arriving at the mixing head which is not in operation at least before it is put into operation, the components being delivered by units (M.P., C.P.) which are common to the mixing heads, but independent of one another in regard to the "mix" and "condition" operating modes.

## Revendications

1. Dispositif pour la fabrication d'objets moulés (18) ayant une dimension sans fin en polyuréthane et constitué de :
a) au moins deux têtes de mélange (1, 3, I, II) fonctionnant alternativement, pour les composants réactifs de polyuréthane, et qui présentent des vannes de commutation (4, 5) pour les positions de fonctionnement " mélange" et "conditionnement",
b) une pompe de dosage (D. P.) commune à chaque composant avec une conduite (40, 50) d'amenée sur chaque tête de mélange,
c) une pompe de conditionnement (C. P.) commune à chaque composant avec une conduite d'amenée sur chaque tête de mélange,
d) des vannes (1.2, 1.3, 2.2, 2.3) prévues à l'entrée des composants dans chaque tête de mélange pour effectuer la commutation entre les conduites d'amenée de la pompe de dosage et les conduites d'amenée de la pompe de conditionnement, les entrées, pour la position de fonctionnement "mélange" ,de la conduite d'alimentation de la pompe de dosage et pour la position de fonctionnement "conditionnement", de la conduite d'alimentation de la pompe de conditionnement, étant fermées, et
e) une conduite de retour (41, 51) pour chaque composant et pour chaque tête de mélange, qui est activée dans la position de fonctionnement "conditionnement".

2. Procédé de fabrication de corps moulés (18) de polyuréthane ayant une dimension sans fin, avec mise en oeuvre d'au moins deux têtes de mélange (1.3,I,II) fonctionnant alternativement, pour les composants réactifs de polyuréthane, procédé dans lequel, dans la tête de mélange n'étant respectivement pas en fonctionnement, et au moins avant la mise en route, on assure un matériau conditionné exactement, par circulation en boucle, et où les composants sont acheminés par des aggrégats (D.P., C.P.) communs pour les têtes de mélange ,mais cependant indépendants en ce qui concerne les positions de fonctionnement "mélange" et "conditionnement".
